(19) Europäisches Patentamt
European Patent Office
Office européen des brevets

(11) **EP 1 019 800 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(21) Anmeldenummer: **98949895.1**

(22) Anmeldetag: **14.08.1998**

(51) Int Cl.⁷: **G06F 3/033**, G06F 3/14

(86) Internationale Anmeldenummer:
**PCT/DE98/02364**

(87) Internationale Veröffentlichungsnummer:
**WO 99/13396 (18.03.1999 Gazette 1999/11)**

(54) **SYSTEM ZUM ERFASSEN UND ZUM VERARBEITEN VON BENUTZER-EINGABEN**

SYSTEM FOR CAPTURING AND PROCESSING USER ENTRIES

SYSTEME POUR LA SAISIE ET LE TRAITEMENT DES DONNEES UTILISATEUR

(84) Benannte Vertragsstaaten:
**DE ES FR GB IT**

(30) Priorität: **08.09.1997 DE 19739284**

(43) Veröffentlichungstag der Anmeldung:
**19.07.2000 Patentblatt 2000/29**

(73) Patentinhaber: **Wincor Nixdorf GmbH & Co KG
33106 Paderborn (DE)**

(72) Erfinder:
• **BAITZ, Günter
D-13629 Berlin (DE)**
• **WIDMAIER, Dominik
D-12157 Berlin (DE)**

(56) Entgegenhaltungen:
**EP-A- 0 572 031        WO-A-97/11449
US-A- 5 250 929**

**Beschreibung**

Die vorliegende Erfindung betrifft ein System zum Erfassen und zum Verarbeiten von Eingaben, die von einem Benutzer oder mehreren Benutzern eingegeben werden.

Es sind Datenverarbeitungssysteme bekannt, in denen mehrere Sichtgeräte oder Anzeigeeinrichtungen verwendet werden. Dies ist z.B. an Registrierkassen, POS(Point Of Sale)-Terminals oder an Dienstleistungsterminals der Fall, die zumindest mit einer Bediener- und einer Kundenanzeige ausgestattet sind. Dem Bediener werden dabei in der Regel sämtliche Informationen, d.h. ein Vollbild des Systems, auf einem der Sichtgeräte oder einem Display, z.B. einem LCD-Bildschirm oder einem CRT-Bildschirm oder einfach Monitor angezeigt, wohingegen z.B. einem Kunden nur für ihn bestimmte, spezielle Informationen, d.h. ein Teilbild aus dem Vollbild, gezeigt wird. Häufig umfaßt ein solches Mehrbildschirmsystem auch einen Animationsbildschirm für die Wiedergabe von Werbung oder allgemeinen Informationen oder auch eine Nummern-Anzeigeeinrichtung für die Anzeige der Reservierungsnummer eines nächsten Kunden.

Allgemein wird ein System mit mehreren Sichtgeräten oder Anzeigeeinrichtungen dort verwendet, wo mehrere Personen Datenerfassungs- oder Bearbeitungsvorgänge beobachten oder wo verschiedenen Personen jeweils ein Teil der insgesamt zur Anzeige zur Verfügung stehenden Gesamtinformationen zugänglich gemacht werden soll. In der Patentanmeldung DE 19609667.7 der Siemens-Nixdorf Informationssysteme AG wird der Betrieb mehrerer Sichtgeräte an einer einzigen Bildschirmsteuerung beschrieben. Die erläuterte Bildschirmsteuereinheit ist schaltungstechnisch derart ausgelegt, daß Teilbilder oder Bildausschnitte aus einem Vollbild auf LCD-Bildschirmen entsprechender Anzahl angezeigt werden können.

Bei vielen Anwendungen ist jedoch nicht nur die passive Anzeige von Informationen auf den verschiedenen Sichtgeräten gefordert, sondern die Benutzer, z.B. die Kunden, werden durch die Bildschirmanzeige zu einer Eingabe oder Interaktion aufgefordert.

Aus "Research Disclosure" März 1987 Nr. 27563 (S.170) mit Titel "Absolute Display Window Mouse/Mice" ist es bekannt, mehrere Anzeigen zu verwenden, die einen berührungsempfindlichen Eingabeschirm haben. Beispielsweise können diese Anzeigeeinrichtungen mit dünnen Leitungen versehen sein. Aus dieser Druckschrift ist jedoch nicht bekannt, wie die Signale dieser Anzeigeeinrichtungen mit berührungsempfindlichen Schirmen verarbeitet werden.

Die US 5,274,363 beschreibt ein interaktives Anzeigesystem, bei dem mehrere kleine Anzeigegeräte mit berührungsempfindlicher Eingabefläche verwendet werden. Jedes Anzeigegerät zeigt einen Bildausschnitt. Auf einer großen Zeichentafel wird das gesamte Bild dargestellt. Abhängig von der Eingabe über einen Positionssensor werden gespeicherte Informationen zu einer Anzeigeeinheit übertragen, die einen Teilausschnitt des Gesamtbildes wiedergibt.

Ferner ist aus der nachveröffentlichen Druckschrift US 4,730,186 ein Eingabesystem bekannt, bei dem über einen Eingabeschirm eine handschriftliche Eingabe erfolgt, die auf dem zugehörigen Schirm wiedergegeben wird. Diese Eingaben werden auch auf einem größeren Schirm gezeigt, wobei eine Koordinatentransformation stattfindet.

In der EP 0 572 031 A1 ist eine elektronische Schreibtafel geoffenbart, die einen Schreibbildschirm und einen Zeigestift umfaßt. Der Schreibbildschirm ist in einen Bereich nicht reduzierter Bildgröße und einen zweiten Bereich reduzierter Bildgröße aufgeteilt. In den Schreibbildschirm sind Sensoren eingelassen, die mit Hilfe des Zeigestiftes aktivierbar sind. Eine mit dem Zeigestift handschriftlich erzeugte Schreibspur wird einer Mustererkennung unterzogen und danach einem Projektor zugeführt, der das Muster gleichzeitig auf den Bereich nicht reduzierter Bildgröße des Schreibbildschirms und verkleinert auf den Bereich reduzierter Bildgröße projiziert.

Der WO 97 11449 A1 ist ein sogenanntes Graphical User Interface-System (GUI) für mehrere Bildschirme zu entnehmen, die jeweils mit einer berührungsempfindlichen Eingabefläche (Touchscreen) ausgestattet sind. Auf den Bildschirmen sind Teilbilder aus einem virtuellen Gesamtbild darstellbar. Mit Hilfe des Touchscreen können absolute Positionen auf der Fläche des jeweiligen Bildschirms bestimmt werden. Der WO 97 11449 A1 ist nicht zu entnehmen, daß die Koordinaten der den Teilbildern zugehörenden absoluten Positionen in eine Position des virtuellen Gesamtbildes umgerechnet werden.

Aufgabe der vorliegenden Erfindung ist es, ein System mit mehreren Sichtgeräten anzugeben, das benutzerabhängige Eingaben, die auf die Anzeigeinhalte der einzelnen Sichtgeräte hin getätigt werden, zentral erfaßt und für die weitere Verarbeitung aufbereitet.

Diese Aufgabe wird durch das System gemäß Anspruch 1 gelöst.

Gemäß der Erfindung kann die virtuelle Bildfläche größer sein als die Fläche jeder einzelnen Anzeigeeinrichtung. Diese virtuelle Bildfläche stellt die Summe aller anzuzeigenden Bildflächen dar. Im folgenden wird die virtuelle Bildfläche auch als "Vollbild" bezeichnet.

Das erfindungsgemäße System hat den entscheidenden Vorteil, daß Eingaben in das System an den Orten der Sichtgeräte von den unterschiedlichsten Benutzern ausgeführt werden können, denn für die Eingabe an den Touchscreens sind weder Kenntnisse über das System selbst noch irgendwelche Computerkenntnisse überhaupt im Gegensatz zu anderen Eingabemedien wie z.B. einer Maus, einem Trackball oder einer Tastatur oder ähnlichem erforderlich. Der Bediener braucht lediglich den Touchscreen über der am Bildschirm angezeigten Funktion, z.B. einem angezeigten Auswahlfeld o.ä., zu berühren, um die gewünschte Eingabe auszuführen. Durch die direkte Auge-Hand-Koordination ist ein schnelles und auch sicheres Auslösen der angezeigten Funktionen möglich.

Jeder in einem Speicher der erfindungsgemäßen Vorrichtung abgespeicherte Parameterdatensatz umfaßt vorzugsweise Daten, die einen Skalierungsfaktor, die Größe des jeweiligen Bildschirms, an dem der jeweilige Touchscreen angeordnet ist, und die Lage des auf der jeweiligen Anzeigeeinrichtung angezeigten Teilbilds in Zuordnung zum Vollbild angeben.

Vorzugsweise ist jedes der angezeigten Teilbilder immer ein rechteckiger Ausschnitt aus dem Vollbild. Die Verarbeitungseinrichtung kann dann die Koordinaten der Berührung, die auf das Vollbild bezogen sind, aus $(X,Y) = (X1,Y1) \times k + (X0,Y0)$ berechnen, wobei $(X1,Y1)$ die Koordinaten der Berührung auf dem Touchscreen, bezogen auf das Teilbild angibt, k ein Skalierungsfaktor ist, der bei vergrößerter Darstellung gegenüber dem zugeordneten Ausschnitt im Vollbild einen Wert zwischen 0 und 1 annimmt, $(X0,Y0)$ die Koordinaten eines ausgewählten Punkts des Teilbilds im Vollbild bei einem Skalierungsfaktor k = 1 angeben, also z.B. die linke untere Ecke des Teilbilds im Vollbild oder die rechte obere Ecke des rechteckigen Ausschnitts im Vollbild ist, und $(X,Y)$ die zugeordneten Koordinaten der Berührung im Vollbild sind. Mittels dieser Vorschrift lassen sich die auf das Vollbild umgerechneten Koordinaten der Berührung auf dem Touchscreen im Teilbild relativ einfach ermitteln.

Die Verarbeitungseinrichtung des erfindungsgemäßen Systems ist vorzugsweise als Computer, z.B. als PC, oder Mikroprozessorsystem oder ähnliches, ausgelegt und umfaßt eine Speichereinrichtung, z.B. einen ROM oder einen EEPROM oder ähnliches, in der die Parameterdatensätze abgespeichert sind. Dieser Speicher kann auch als wiederladbarer Speicher ausgebildet sein, z.B als RAM, um die Parameterdatensätze ändern oder erneuern zu können, wodurch die Flexibilität des Systems verbessert wird. Der Computer berechnet dann aus den Meßsignalen bzw. den diesen zugeordneten Meßwerten von der Erfassungseinrichtung und in Abhängigkeit von den Parameterdatensätzen die den Koordinaten der Berührung im jeweiligen Teilbild zugeordneten Daten für die Koordinatenberührung im Vollbild, z.B. nach dem obenstehenden Vektorausdruck.

Gemäß einer alternativen Ausführungsform kann die Verarbeitungseinrichtung der vorliegenden Erfindung neben dem Computer und der Speichereinrichtung auch zumindest einen Touchscreen-Controller haben, der zwischen die Erfassungseinrichtung und den Computer geschaltet ist und der aus den Meßsignalen in Abhängigkeit von den Parameterdatensätzen die den Koordinaten der Berührung im Teilbild zugeordneten Daten für die Koordinaten der Berührung im Vollbild berechnet und an den Computer ausgibt.

Alternativ hierzu kann der Controller derart ausgelegt sein, daß er nur die Koordinaten der Berührung im Teilbild berechnet und an den Computer ausgibt, der dann aus diesen Daten in Abhängigkeit von den Parameterdatensätzen die Koordinaten der Berührung im Vollbild ermittelt. Die Verwendung des Controllers hat den Vorteil, daß der Computer bzw. der PC entlastet wird.

Vorzugsweise hat die Erfassungseinrichtung eine einzige Meßschaltung und zudem eine Schalteinrichtung oder Auswahlschaltung, die zwischen der Meßschaltung und den Touchscreens geschaltet ist, wobei an der Meßschaltung sämtliche Touchscreen-Signale eingangsseitig anliegen und die Auswahlschaltung immer nur eines der Touchscreensignale gesteuert zur Meßschaltung durchschaltet. Diese Weiterbildung des erfindungsgemäßen Systems hat den Vorteil, daß nur eine der oft aufwendigen Meßschaltungen verwendet werden muß. Die Auswahlschaltung kann vom Computer oder vom Controller gesteuert werden, die somit das betreffende Touchscreen-Signal selektieren, das ausgewertet werden soll.

Die Erfassungseinrichtung kann auch mehrere Meßschaltungen haben, die jeweils mit einem Touchscreen verbunden sind und jeweils aus dem vom Touchscreen zugeführten Signal ein zugeordnetes Meßsignal erzeugen.

Bei einer alternativen Ausführungsform des erfindungsgemäßen Systems sind mehrere Touchscreen-Controller, deren Anzahl der der Touchscreens entspricht, und entsprechend viele Meßschaltungen vorgesehen, von denen jede mit einem Touchscreen-Controller und einem Touchscreen verbunden ist, wobei jeder der Touchscreen-Controller aus dem ihm zugeführten Signal und in Abhängigkeit von den Parameterdatensätzen die den Koordinaten die Berührung im jeweiligen Teilbild zugeordneten Koordinaten im Vollbild bestimmt und dem übergeordneten Computer, z.B. PC, bereitstellt.

Vorteilhafte Weiterbildungen sind den Unteransprüchen 2 bis 10 zu entnehmen.

Weitere Vorteile, vorteilhafte Weiterbildungen und Anwendungsmöglichkeiten der vorliegenden Erfindung sind der nachfolgenden Beschreibung von Ausführungsbeispielen der Erfindung in Verbindung mit den Zeichnungen zu entnehmen. Es zeigen:

Figur 1 eine erste Ausführungsform des erfindungsgemäßen Systems mit zwei Anzeigeeinrichtungen und zwei Touchscreens;

Figur 2 eine schematische Darstellung eines in der Figur 1 verwendeten VGA-Adapters;

Figur 3 eine schematische Ansicht einer zweiten Ausführungsform des erfindungsgemäßen Systems mit alternativer Erfassungseinrichtung;

Figur 4    eine schematische Teilansicht einer dritten Ausführungsform des erfindungsgemäßen Systems mit n Anzeigeeinrichtungen und n Meßschaltungen; und

Figur 5    eine schematische Ansicht einer vierten Ausführungsform des erfindungsgemäßen Systems, bei dem auf der ersten Anzeigeeinrichtung und auch auf der zweiten Anzeigerichtung jeweils ein Teilbild des Vollbilds angezeigt wird.

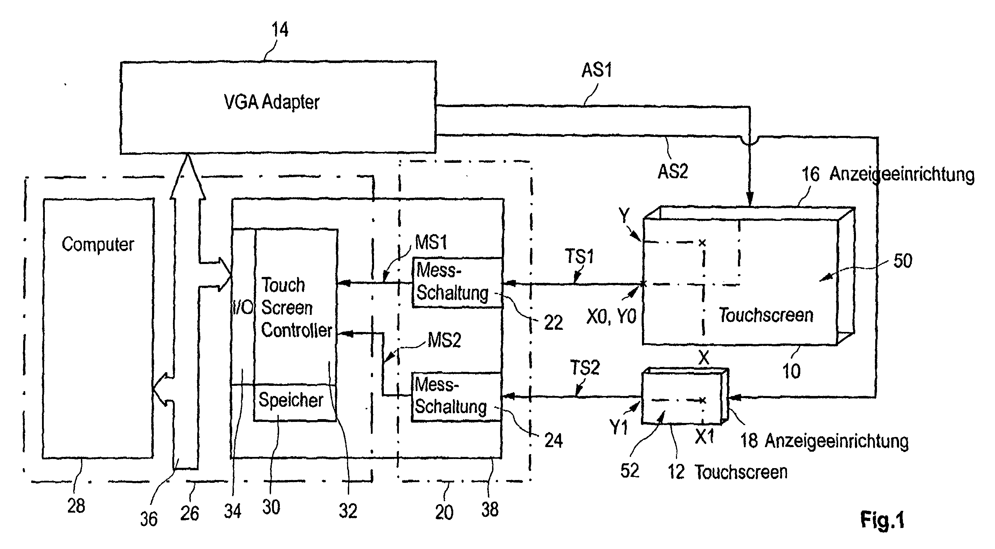

In der Figur 1 ist schematisch eine erste Ausführungsform des erfindungsgemäßen Systems gezeigt, das unter anderem eine Verarbeitungseinrichtung 26, einen VGA-Adapter 14, der mit der Verarbeitungseinrichtung 26 verbunden ist, eine erste Anzeigeeinrichtung 16 und eine zweite Anzeigeeinrichtung 18, die mit dem VGA-Adapter 14 verbunden sind und von diesem mit Anzeigesignalen AS1 bzw. AS2 angesteuert werden, einen ersten Touchscreen 10 und einen zweiten Touchscreen 12 und eine Erfassungseinrichtung 20 hat, die eingangsseitig mit dem ersten Touchscreen 10 und dem zweiten Touchscreen 12 und ausgangsseitig mit der Verarbeitungseinrichtung 26 verbunden ist.

Die Verarbeitungseinrichtung 26 umfaßt einen Computer 28 als übergeordnete Steuereinheit, einen Bus 36, einen Touchscreen-Controller 32, der über eine I/O-Schnittstelle 34 mit dem Bus 36 kommuniziert, und einen Speicher 30, der mit dem Touchscreen-Controller 32 verbunden ist.

Der Computer 28 ist als herkömmliches Computersystem ausgelegt und hat unter anderem einen leistungsfähigen Mikroprozessor, einen Arbeitsspeicher, z.B. einen RAM, der mit dem Mikroprozessor verbunden ist, einen Massenspeicher, z.B. eine Festplatte, und entsprechende Eingabe/Ausgabe-Einheiten. Im Massenspeicher des Computers sind wie üblich das Betriebssystem des Computers und ein Treiber bzw. ein Applikationsprogramm nicht flüchtig abgespeichert, das die Informationen vom Touchscreen-Controller 32 auswertet.

Der Bus 36 ist als voll bidirektionaler Bus mit Daten-, Steuer- und Adressleitungen ausgelegt und verbindet den Computer 28, den Touchscreen-Controller 32 über die I/O-Schnittstelle 34 und den VGA-Adapter 14 miteinander.

Der Touchscreen-Controller 32 der Verarbeitungseinrichtung 26 ist als Mikroprozessorsystem ausgelegt und hat unter anderen einen Mikroprozessor (nicht gezeigt) mit einem ROM und/oder einem RAM zum Speichern eines Ausführungsprogramms und einen weiteren Speicher 30 zum Speichern von Parameterdatensätzen. Der Touchscreen-Controller 32 ist über die I/O-Schnittstelle 34 mit dem Bus 36 der Verarbeitungseinrichtung 26 verbunden und hat eine weitere Ein/Ausgabe-Schnittstelle (nicht gezeigt), über die er mit den Ausgängen der Erfassungseinrichtung 20 verbunden ist.

Die Erfassungseinrichtung 20 hat zwei identisch aufgebaute Meßschaltungen 22 und 24. Der genaue Aufbau der Meßschaltungen 22 und 24 hängt von der jeweils verwendeten Touchscreen-Technologie ab, also davon, ob z.B. ein resistiver, ein kapazitiver, ein mit akustischen Oberflächenwellen oder mit Lichtwellen arbeitender Touchscreen 10, 12 verwendet wird. Typische Meßschaltungen, die für einen kapazitiven Touchscreen ausgelegt sind, sind in dem Dokument US 4,476,463 beschrieben, auf das hier Bezug genommen wird.

Die Meßschaltung 22 ist eingangsseitig mit dem Touchscreen 10 verbunden und nimmt das vom Touchscreen 10 erzeugte und ausgegebene elektrische Touchscreen-Signal TS1 eingangsseitig entgegen und erzeugt aus dem Touchscreen-Signal TS1 ein Meßsignal MS1, das ein Maß für die (X,Y)-Koordinaten der Berührung auf dem Touchscreen 10 ist. Das Meßsignal MS1 liegt z.B. als analog/digital gewandelter Meßwert im Form von digitalen Daten z.B. in einem Ausgangspuffer der Meßschaltung 22 vor.

Die zweite Meßschaltung 24 ist mit dem zweiten Touchscreen 12 verbunden und nimmt das vom Touchscreen 12 erzeugte Touchscreen-Signal TS2 eingangsseitig entgegen. Aus dem elektrischen Touchscreen-Signal TS2 erzeugt die Meßschaltung 24 das Meßsignal MS2, das wiederum zum Beispiel als analog/digital gewandelter Datenwert am Ausgang der Meßschaltung 24 für den Touchscreen-Controller 32 bereitsteht. Die Analog/Digitalwandlung erfolgt vorzugsweise mit Hilfe des Mikroprozessorsystems im Touchscreen-Controller 32.

Die Erfassungseinrichtung 20 mit ihren Meßschaltungen 22 und 24 und der Touchscreen-Controller 32, die I/O-Schnittstelle 34 und der Speicher 30 können auf einem in einen Gehäuse-Slot des Computers 28 eingesteckten Controller-Board 38 mit Steckverbindung zum Bus 36 untergebracht sein.

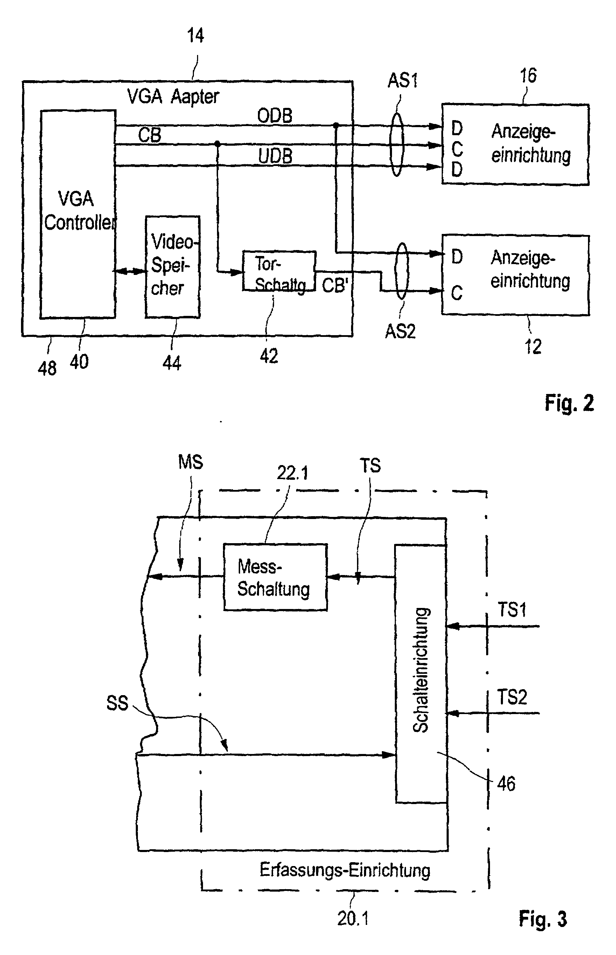

Der VGA-Adapter 14 umfaßt im wesentlichen einen VGA-Controller 40 (vgl. Figur 2), einen elektronischen Videospeicher 44, der als Singleport-RAM oder Dualport-RAM ausgelegt sein kann und mit dem VGA-Controller 40 verbunden ist, eine Torschaltung 42 und ein VGA-BIOS (nicht gezeigt). Aufbau und Funktion des VGA-Controllers 40 sind bekannt und brauchen deshalb hier nicht weiter erläutert werden. Als VGA-Controller 40 kann z.B. der in der Broschüre "High Performance Flat Panel/CRT GUI Accelerator 65550", Januar 1997, der Firma Chips and Technologies, Inc. beschriebene Controller verwendet werden. Der VGA-Adapter 14 ist überlicherweise auf einer gedruckten Leiterplatte 48 untergebracht, die in einen PC-Slot einsteckbar ausgebildet ist.

Der VGA-Controller 40 ist auf Dualscan-Betrieb eingestellt und erzeugt Bilddaten-, und Steuer/Taktsignale, die als Anzeigesignale AS1 und AS2 am Ausgang des VGA-Adapters 14 für die erste Anzeigeeinrichtung 16 bzw. die zweite Anzeigeeinrichtung 18 bereitstehen.

Die erste Anzeigeeinrichtung 16 hat einen LCD-Vollbildschirm mit z.B. 640 x 480 Bildpunkten, der als Dualscan-LCD-Bildschirm ausgelegt ist, und deshalb in einen oberen Bereich und einen unteren Bereich aufgeteilt ist, die jeweils an einem Dateneingang D ansteuerbar sind. Der Dateneingang D des oberen Bereichs ist mit einem oberen Datenbus ODB des VGA-Adapters 14 bzw. des VGA-Controllers 40 verbunden. Der Dateneingang D des unteren Bereichs der ersten Anzeigeeinrichtung 16 ist über einen unteren Datenbus UDB mit dem VGA-Adapter 14 bzw. dem VGA-Controller 40 verbunden. Der Takteingang C der ersten Anzeigeeinrichtung 16 ist über einen Steuer/Taktbus CB mit dem VGA-Adapter 14 bzw. dem VGA-Controller 40 verbunden. Auf dem Steur/Taktbus CB werden die erforderlichen Takt- und Steuersignale der ersten Anzeigeeinrichtung 16 zugeführt. Die erste Anzeigeeinrichtung 16 zeigt somit das Vollbild 50 an.

Die zweite Anzeigeeinrichtung 18 hat einen LCD-Bildschirm und arbeitet nach dem Singlescan-Verfahren. Ihr Dateneingang D ist über den oberen Datenbus ODB mit dem VGA-Adapter 14 bzw. dem VGA-Controller 40 verbunden. Ihr Takteingang C ist über einen Steuer/Taktbus CB' mit dem Ausgang der Torschaltung 42 des VGA-Adapters 14 verbunden. Die Torschaltung 42 ist eingangsseitig über den Taktbus CB mit dem VGA-Controller 40 verbunden. Die zweite Anzeigeeinrichtung 18 hat ein maximales Format von 320 x 240 Bildpunkten oder Bildelementen bzw. Pixeln. Die Torschaltung 42 ist mit Zählern und Gattern derart aufgebaut, daß nur Steuer- und Taktsignale auf dem Steuerbus CB zum Steuerbus CB' durchgelassen werden, die die Bildelemente 0 bis 320 in x-Richtung und 240 bis 480 in y-Richtung des Vollbildes 50 betreffen. Die zweite Anzeigeeinrichtung 18 zeigt somit das linke untere Viertel des Vollbilds 50 als Teilbild 52 an. Alle anderen Takt- und Steuersignale auf dem Steuerbus CB werden von der Torschaltung 42 unterdrückt. Damit stellt die Torschaltung 42 sicher, daß auf der zweiten Anzeigeeinrichtung 18 nur das vorgesehene Fenster bzw. Teilbild 52 des Vollbilds 50 der ersten Anzeigevorrichtung 16 erscheint.

Nachfolgend wird davon ausgegangen, daß die Touchscreens 10 und 12 deckungsgleich auf die jeweiligen Bildschirme der Anzeigeeinrichtungen 16 und 18 einjustiert sind und die effektiv detektierenden Oberflächen der Touchscreens 10 und 12 den Bildschirmabmessungen 640 x 480 bzw. 320 x 240 entsprechen. Das gesamte in der Figur 1 gezeigte System wurde initialisiert und ist arbeitsbereit.

Um eine Eingabe zu machen, berührt ein Benutzer, z.B. ein Kunde, die Oberfläche des zweiten Touchscreens 12 an einer Stelle, der die Koordinaten (X1,Y1) zugeordnet sind. Beispielsweise können die Koordinaten (X1,Y1) = (200, 120) sein. Die Berührung des zweiten Touchscreens 12 löst das Touchscreen-Signal TS2 aus, das von der zweiten Meßschaltung 24 der Erfassungseinrichtung 20 erfaßt wird und in ein Meßsignal MS2 umgesetzt wird, das von der Meßschaltung 24 analog/digital gewandelt wird und als digitaler Meßwert zwischengepuffert am Ausgang der Meßschaltung 24 bereitsteht. Der Touchscreen-Controller 32 der Verarbeitungseinrichtung 26 frägt den Ausgang der Meßschaltung 24 zyklisch ab. Wenn ein digitaler Meßwert des Meßsignals MS2 vorliegt, übernimmt der Touchscreen-Controller 32 den digitalisierten Meßwert zur weiteren Verarbeitung.

Der Speicher 30 der Verarbeitungseinrichtung 26 umfaßt einen ROM-Bereich, in dem eine vorbereitete Tabelle abgespeichert ist, die Zuordnungen zwischen den Meßwerten des Meßsignals MS2 und den entsprechenden Koordinaten auf dem Touchscreen 12 unter Berücksichtigung der Bildschirmgröße angibt. Für das zuvor erwähnte Beispiel liest der Touchscreen-Controller 32 also aus dem digitalisierten Meßwert des Meßsignals MS2 die Daten der Koordinaten (X1,Y1) = (200,120) in seinen Arbeitsspeicher ein. Diese Koordinaten (200,120) sind entsprechenden Bildelement-Koordinaten oder Pixel-Koordinaten oder auch einer gemittelten Bildelement-Koordinate aus einer Bildelement-Koordinatenmenge des von der zweiten Anzeigeeinrichtung 18 angezeigten Teilbildes 52 oder Fensters aus dem Vollbild 50 der ersten Anzeigeeinrichtung 16 zugeordnet.

Aus den so ermittelten Koordinaten (X1,Y1) und dem Ausdruck (1)

$$\begin{pmatrix} X \\ Y \end{pmatrix} = \begin{pmatrix} X1 \\ Y1 \end{pmatrix} \bullet k + \begin{pmatrix} X0 \\ Y0 \end{pmatrix}$$

berechnet der Touchscreen-Controller 32 die den Koordinaten (X1,Y1) im Teilbild zugeordneten Koordinaten (X,Y) im Vollbild. (X0,Y0) ist allgemein ein Versatzvektor, der die Lage eines speziellen Bildpunkts des Teilbilds im Vollbild bei einem Skalierungsfaktor k = 1 angibt. Dieser Versatzvektor (X0,Y0) kann z.B. den Koordinaten des Pixels der linken unteren Ecke des rechteckigen Teilbilds 52 im rechteckigen Vollbild 50 entsprechen. k ist ein Skalierungsfaktor, der bei Vergrößerung oder Verkleinerung verwendet wird. Der Skalierungsfaktor k hat allgemein einen Wert zwischen 0 und 1, wenn das Teilbild gegenüber dem zugeordneten Ausschnitt im Vollbild vergrößert angezeigt wird. k hat einen Wert größer als 1, wenn das Teilbild im Vergleich zum entsprechenden Ausschnitt im Vollbild verkleinert von dem Sichtgerät bzw. der Anzeigeeinrichtung dargestellt wird. Findet weder eine verkleinerte noch eine vergrößerte Darstellung des Teilbilds statt, liegt eine 1:1 Umsetzung vor, und der Skalierungsfaktor hat dann den Wert k = 1. Daten über die Bildschirmgröße der zweiten Anzeigeeinrichtung 18, der Skalierungsfaktor k und der Versatzvektor (X0,Y0) sind in dem Parameter-Datensatz für den zweiten Touchscreen 12 enthalten. Der Parameter-Datensatz ist im Speicher 30 der Verarbeitungseinrichtung 26 gespeichert.

Im Beispiel der Figur 1 hat der Skalierungsfaktor k den Wert 1, da hier eine 1:1 Umsetzung zwischen Vollbild 50 und Teilbild 52 stattfindet. Der Versatzvektor (X0,Y0) hat z.B. den Wert (0,240) in Pixel-Koordinaten des Vollbilds 50 der ersten Anzeigeeinrichtung 16 ausgedrückt. Der Versatzvektor gibt allgemein die Lage des Ursprungs des Teilbilds im Vollbild an. Im Beispiel ergibt sich für X = 200 + 0 = 200, Y = 120 + 240 = 360. Die Koordinaten (X,Y) werden dann vom Touchscreen-Controller 32 in der I/0-Schnittstelle 34 zwischengespeichert und dem Computer 28 über den Bus 36 bereitgestellt. Der auf die Werte (X,Y) zugreifen und sie weiter verarbeiten kann.

Berührt eine Person die Oberfläche des ersten Touchscreens 10, der auf dem Bildschirm der ersten Anzeigeeinrichtung 16 deckungsgleich angeordnet ist, wird ein elektrisches Touchscreen-Signal TS1 ausgelöst, das ein Maß für die Koordinaten der Berührung auf der Oberfläche des ersten Touchscreens 10 ist. Das Touchscreen-Signal TS1 wird von der ersten Meßschaltung 22 entgegengenommen und, wie bei der zweiten Meßschaltung 24 erläutert, verarbeitet, um schließlich einen digitalen Meßwert des Meßsignals MS1 am Ausgang der Meßschaltung 22 dem Touchscreen-Controller 32 bereitzustellen.

Der Touchscreen-Controller 32 frägt auch den Ausgang der Meßschaltung 22 zyklisch ab, was als Polling bezeichnet wird, und verarbeitet den digitalen Meßwert des Meßsignals MS1, wenn er einen Meßwert feststellt. Die Verarbeitung des Meßsignals MS1 durch den Touchscreen-Controller 32 läuft analog zur obenstehend erläuterten Verarbeitung des Meßsignals MS2 der zweiten Meßschaltung 24 ab. Da jedoch die erste Anzeigeeinrichtung 16 das Vollbild 50 anzeigt, ist (X,Y) = (X1,Y1), da das Vollbild ohne Vergrößerung oder Verkleinerung auf dem Bildschirm der Anzeigeeinrichtung 16 angezeigt wird, d.h. der Skalierungsfaktor k = 1 und der Versatzvektor (X0,Y0) ist (0,0) für den Vollbild-Bildschirm der ersten Anzeigeeinrichtung 16. Der Parameterdatensatz für den ersten Touchscreen 10 ist im Speicher 30 der Verarbeitungseinrichtung 26 gespeichert und umfaßt Daten über die Bildschirmgröße, den Skalierungsfaktor k = 1 und den Versatzvektor (X0,Y0) = (0,0), der dem Pixel in der linken unteren Ecke des Vollbilds 50 entspricht. Der Koordinaten-Datenwert (X,Y) wird vom Touchscreen-Controller 32 in der I/O-Schnittstelle 34 für einen Zugriff durch den Computer 28 über den Bus 36 bereitgestellt.

In der Figur 3 ist eine Erfassungseinrichtung 20.1 gezeigt, die in einer zweiten Ausführungsform der vorliegenden Erfindung verwendet wird. In der zweiten Ausführungsform der Erfindung ist die Erfassungseinrichtung 20 gemäß Figur 1 durch die Erfassungseinrichtung 20.1 der Figur 3 ersetzt, alle anderen Einrichtungen und Komponenten der zweiten Ausführungsform der Erfindung entsprechen im wesentlichen den sonstigen Einrichtungen und Komponenten der ersten Ausführungsform der Erfindung gemäß den Figuren 1 und 2.

Die Erfassungseinrichtung 20.1 der zweiten Ausführungsform der Erfindung hat eingangsseitig eine Schalteinrichtung 46, die mit dem Touchscreen 10 und dem zweiten Touchscreen 12 und auch mit einem Steuerausgang (nicht gezeigt) des Touchscreen-Controllers 32 verbunden ist.

Der Touchscreen-Controller 32 gibt an seinem Steuerausgang ein Steuersignal SS an die Schalteinrichtung 46 aus, das die Schalteinrichtung 46 dazu veranlaßt, entweder das elektrische Touchscreen-Signal TS1 vom ersten Touchscreen 10 oder das zweite Touchscreen-Signal TS2 vom zweiten Touchscreen 12 zu der einzigen Meßschaltung 22.1 der Erfassungseinrichtung 20.1 als Touchscreen-Signal TS durchzuschalten. Die Meßschaltung 22.1 entspricht vom Aufbau und der Funktion her der Meßschaltung 22 oder 24 der ersten Ausführungsform gemäß Figur 1.

Der Touchscreen-Controller 32 gibt über seinen Steuerausgang kurz bevor er eine Abfrage zyklisch durchführt, ob eine Berührung auf dem ersten Touchscreen 10 ausgeführt wird, das Steuersignal SS derart konfiguriert an die Schalteinrichtung oder Auswahlschaltung 46 aus, daß das erste Touchscreen-Signal TS1 von der Schalteinrichtung 46 durchgeschaltet wird, und folglich das Signal TS dem ersten Touchscreen-Signal TS1 entspricht. Die einzige Meßschaltung 22.1 erzeugt dann einen entsprechenden Meßwert bzw. das Meßsignal MS, das vom Touchscreen-Controller dann weiter verarbeitet wird, wie es mit dem Meßsignal MS1 in der ersten Ausführungsform der Erfindung gemäß Figur 1 erläutert wurde.

Dann im Falle, daß kein Meßsignal MS und folglich keine Berührung des ersten Touchscreens 10 stattgefunden hat, oder ein Meßsignal MS für den ersten Touchscreen 10 vom Touchscreen-Controller 32 festgestellt worden ist, gibt der Touchscreen-Controller 32 anschließend ein Steuersignal SS an die Schalteinrichtung 46 der Erfassungseinrichtung 20.1 aus, das derart konfiguriert ist, daß nun das zweite Touchscreen-Signal TS2 durchgeschaltet wird und folglich das Signal TS nun dem zweiten Touchscreen-Signal TS2 entspricht. Das erste Touchscreen-Signal TS1 wird von der Schalteinrichtung 46 dann unterdrückt. Die einzige Meßschaltung 22.1 ermittelt dann aus dem Signal TS das Meßsignal MS, das nun dem Meßsignal MS2 der ersten Ausführungsform gemäß Figur 1 entspricht. Die weitere Verarbeitung des Meßsignals MS durch den Touchscreen-Controller 32 verläuft dann analog zu der Verarbeitung des Meßsignals MS2 der ersten Ausführungsform gemäß Figur 1.

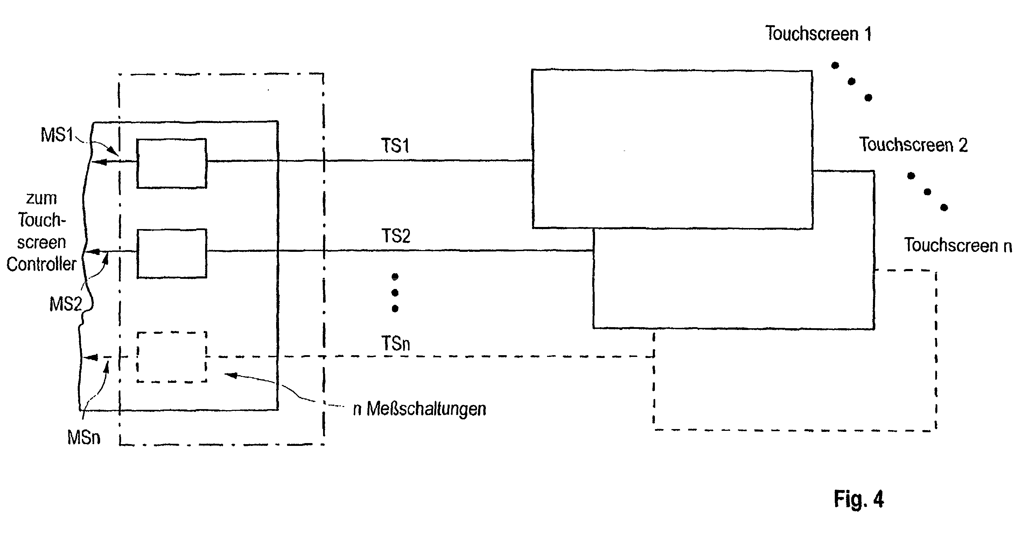

In der Figur 4 ist schematisch eine dritte Ausführungsform der vorliegenden Erfindung gezeigt, die allgemein verdeutlichen soll, daß im Prinzip eine beliebige Anzahl n von Touchscreens an eine Erfassungseinrichtung 20.2 angeschlossen werden kann. Bei dieser Ausführungsform sind dann allgemein n Meßschaltungen in der Erfassungseinrichtung 20.2 enthalten. Die n Meßschaltungen können alle mit einem einzigen Touchscreen-Controller mit entsprechenden Ein/Ausgabeports verbunden sein, wie es analog für n = 2 in der ersten Ausführungsform der Erfindung gemäß Figur 1 erläutert wurde. Die n Touchscreens können unterschiedliche Screenabmessungen haben oder identische Größe haben.

Die Erfassungseinrichtung 20.2 kann in anderer Alternative jedoch auch nur eine einzige Meßschaltung haben, der wie in der zweiten Ausführungsform gemäß Figur 3 jedoch eine Schalteinrichtung vorgeschaltet ist, deren Durchschaltverhalten vom Touchscreen-Controller gesteuert wird. Die Schalteinrichtung hat jedoch dann entsprechend n Eingänge für die n Touchscreen-Signale von den n Touchscreens, und entsprechende Durchschaltwege, so daß jedes der n Touchscreen-Signale zur einzigen Meßschaltung der Erfassungseinrichtung 20.3 unter Steuerung des Touchscreen-Controllers 32 durchgeschaltet werden kann. In der Figur 3 ist der Spezialfall für n = 2 dargestellt.

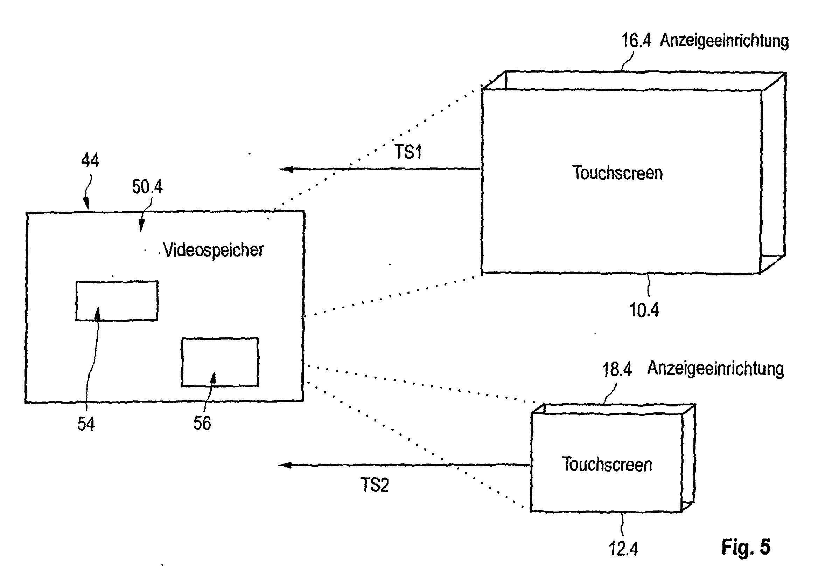

In der Figur 5 ist eine vierte Ausführungsform der Erfindung schematisch dargestellt. Es ist ein fiktives Vollbild 50.4 gezeigt, das den Inhalt des Videospeichers 44 oder Bildwiederholspeichers der Figur 2 wiedergibt. In dem fiktiven Vollbild 50.4 sind zwei Ausschnitte 54 und 56 gezeigt. Über einen VGA-Adapter, der entsprechend ausgelegte Torschaltungen hat, werden die Ausschnitte 54 und 56 auf der Anzeigeeinrichtung 16.4 bzw. 18.4 als Teilbilder des fiktiven Vollbilds 50.4 angezeigt. Wie in der Figur 5 zu sehen ist, sind die Bildschirme der Anzeigeeinrichtungen 16.4 und 18.4 bzw. die, entsprechenden Teilbilder jeweils flächenmäßig größer als die Ausschnitte 54 und 56 des fiktiven Vollbilds 50.4. Folglich bringt der VGA-Adapter die Ausschnitte 54 und 56 als vergrößerte Teilbilder auf den Bildschirmen der Anzeigeeinrichtung 16.4 und 18.4 zur Anzeige.

Die Anzeigeeinrichtung 16.4 ist mit einem Touchscreen 10.4 versehen, während die Anzeigeeinrichtung 18.4 mit einem passenden Touchscreen 12.4 versehen ist. Der Touchscreen 10.4 kann z.B. mit der Erfassungseinrichtung 20 oder mit der Erfassungseinrichtung 20.1 der Figuren 1 bzw. 3 verbunden sein und das elektrische Touchscreen-Signal TS1 an diese Einrichtungen ausgeben. Genauso kann der Touchscreen 12.4 mit einer der Erfassungseinrichtungen 20 oder 20.1 verbunden sein. In der Speichereinrichtung 30 der Verarbeitungseinrichtung 26 sind dann wieder zwei unterschiedliche Parameterdatensätze abgespeichert, die unterschiedliche Daten über die Bildgröße, unterschiedliche Skalierungsfaktoren k im Bereich zwischen 0< k <1 und unterschiedliche Versatzvektoren (vgl. Pfeilspitzen an den linken unteren Ecken der Ausschnitte 54 und 56 in dem fiktiven Vollbild 50.4) haben. Mit Hilfe dieser Parameterdatensätze und des obenstehenden Ausdrucks (1) kann dann der Touchscreen-Controller Berührungen auf den Touchscreens 10.4 bzw. 12.4 in entsprechende Koordinaten (X,Y) des Vollbilds 50.4 umsetzen.

In einer weiteren nicht dargestellten Ausführungsform wird auf den Touchscreen-Controller 32 der Figur 1 verzichtet. Der Computer 28 ist dann direkt über den Bus 36 mit den Ausgängen der Meßschaltungen 22, 24 der Figur 1, d.h. mit der Erfassungseinrichtung 20, oder mit dem Ausgang der einzigen Meßschaltung 22.1, d.h. der Erfassungseinrichtung 20.1 der Figur 3, verbunden und führt sämtliche mit Bezug auf die erste und zweite Ausführungsform erläuternden Funktionen des Touchscreen-Controllers 32, des Speichers 30 und der I/O-Schnittstelle 34 selbst durch.

**Patentansprüche**

1. System zum Erfassen und zum Verarbeiten von benutzerabhängigen Eingaben, wobei das System umfaßt:

   - mehrere Touchscreens (10,12;10.1,12.1), die jeweils ein elektrisches Touchscreen-Signal (TS1,TS2;TSn) erzeugen, das ein Maß für berührungsabhängige Koordinateninformationen ist, das die Berührung der Oberfläche des jeweiligen Touchscreens als benutzerabhängige Eingabe auslöst,

   - mehrere Anzeigeeinrichtungen (16,18; 16.4,18.4), die jeweils ein Vollbild (50;50.4) oder ein Teilbild (52), das einem Ausschnitt (54,56) aus dem Vollbild (50;50.4) oder einem Teil einer insgesamt anzuzeigenden virtuellen Bildfläche entspricht, anzeigen und deren Bildschirme jeweils mit einem der Touchscreens (10,12;10.1,12.1) versehen sind,

   - eine Erfassungseinrichtung (20;20.1;20.2), die die Touchscreen-Signale (TS1,TS2;TSn) erfaßt und für jedes der Touchscreen-Signale ein Meßsignal (MS1,MS2,MSn;MS) bereitstellt, und

   - eine Verarbeitungseinrichtung (26),

     * in der Parameterdatensätze abgespeichert sind, die für die jeweilige Anzeigeeinrichtung (16,18;16.4,18.4) die Lage des zugeordneten Teilbilds (52) im Vollbild (50; 50.4) kennzeichnen, und

     * die aus dem Meßsignal (MS1,MS2,MSn; MS) von der Erfassungseinrichtung (20; 20.1;20.2) und in Abhängigkeit von den Parameterdatensätzen die den Koordinaten der Berührung im Teilbild (52) zugeordneten Daten für die Koordinaten der Berührung im Vollbild (50;50.4) ermittelt.

2.  System nach Anspruch 1, **dadurch gekennzeichnet, daß** jeder Parameterdatensatz Daten umfaßt, die einen Skalierungsfaktor, die Größe des Bildschirms, an dem der jeweilige Touchscreen (10,12; 10.1,12.1) angeordnet ist, und die Lage des auf der jeweiligen Anzeigeeinrichtung (16,18;16.4,18.4) angezeigten Teilbildes (52) in Zuordnung zum Vollbild (50;50.4) angeben.

3.  System nach Anspruch 1 oder Anspruch 2, **dadurch gekennzeichnet, daß** ein angezeigtes Teilbild (52) immer einem rechteckigem Ausschnitt aus dem Vollbild (50) entspricht und daß die Verarbeitungseinrichtung (26) die Koordinaten der Berührung im Vollbild (50) auf der Basis des folgenden Ausdrucks ermittelt:

$$\begin{pmatrix} X \\ Y \end{pmatrix} = \begin{pmatrix} X1 \\ Y1 \end{pmatrix} \bullet k + \begin{pmatrix} X0 \\ Y0 \end{pmatrix}$$

wobei (X1,Y1) die Koordinaten der Berührung im Teilbild (52) angibt, k ein Skalierungsfaktor ist, (X0,Y0) die Koordinaten eines ausgewählten Punkts des Teilbilds (52) im Vollbild (50) bei einem Skalierungsfaktor k = 1 angibt und (X,Y) die zugeordneten Koordinaten der Berührung im Vollbild (50) angeben.

4.  System nach einem der Ansprüche 1 bis 3, **dadurch gekennzeichnet, daß** die Verarbeitungseinrichtung (26) einen Computer (28), der mit einem Videospeicher (44) zum Speichern des Vollbilds (50) verbunden ist, und eine Speichereinrichtung (30) umfaßt, in der die Parameterdatensätze gespeichert sind, wobei der Computer (28) aus den Meßsignalen (MS1,MS2,MSn;MS) und in Abhängigkeit von den Parameterdatensätzen die den Koordinaten der Berührung im jeweiligen Teilbild (52) zugeordneten Daten für die Koordinaten der Berührung im Vollbild (50) ermittelt.

5.  System nach einem der Ansprüche 1 bis 3, **dadurch gekennzeichnet, daß** die Verarbeitungseinrichtung (26) einen Computer (28), der mit einem Videospeicher (44) zum Speichern des Vollbilds (50;50.4) verbunden ist, eine Speichereinrichtung (30), in der die Parameterdatensätze abgespeichert sind, und einen Touchscreen-Controller (32) hat, der zwischen die Erfassungseinrichtung (20; 20.1;20.2) und den Computer (28) geschaltet ist und der aus den Meßsignalen (MS1,MS2,MSn;MS) und in Abhängigkeit von den Parameterdatensätzen die den Koordinaten der Berührung im Teilbild (52) zugeordneten Daten für die Koordinaten der Berührung im Vollbild (50) ermittelt und an den Computer (28) ausgibt.

6.  System nach einem der Ansprüche 1 bis 3, **dadurch gekennzeichnet, daß** die Verarbeitungseinrichtung (26) einen Computer (28), der mit einem Videospeicher (44) verbunden ist, in dem das Vollbild (50) gespeichert ist, eine Speichereinrichtung (30), in der die Parameterdatensätze gespeichert sind, und einen Touchscreen-Controller (32) hat, der zwischen die Erfassungseinrichtung (20;20.1; 20.2) und den Computer (28) geschaltet ist und der aus den Meßsignalen (MS1,MS2,MSn;MS) und in Abhängigkeit von den Parameterdatensätzen die den Koordinaten der Berührung im Teilbild (52) zugeordneten Daten ermittelt und an den Computer (28) ausgibt, der aus diesen Daten und in Abhängigkeit von den Parameterdatensätzen die Koordinaten der Berührung im Vollbild (50) ermittelt.

7.  System nach einem der Ansprüche 1 bis 6, **dadurch gekennzeichnet, daß** die Erfassungseinrichtung (20.1;20.2) eine Meßschaltung (22.1) und eine Schalteinrichtung (46) hat, die zwischen der Meßschaltung (22.1) und den Touchscreens (10,12) geschaltet ist, wobei an der Schalteinrichtung (46) sämtliche Touchscreen-Signale (TS1,TS2,TSn) eingangsseitig anliegen, und die immer nur eines der Touchscreen-Signale zur Meßschaltung (22.1) durchschaltet.

8.  System nach Anspruch 7, **dadurch gekennzeichnet, daß** der Computer (28) oder der Touchscreen-Controller (32) die Schalteinrichtung (46) steuert.

9.  System nach einem der Ansprüche 1 bis 6, **dadurch gekennzeichnet, daß** die Erfassungseinrichtung (20) mehrere Meßschaltungen (22,24) hat, die jeweils mit einem Touchscreen (10,12) verbunden sind und jeweils aus dem Touchscreen-Signal (TS1,TS2,TSn) ein zugeordnetes Meßsignal (MS1,MS2,MSn) erzeugen.

10. System nach einem der Ansprüche 1 bis 3, **dadurch gekennzeichnet, daß** die Verarbeitungseinrichtung (26) einen Computer (28), eine Speichereinrichtung (30), in der die Parameterdatensätze abgespeichert sind, und mehrere Touchscreen-Controller hat, und daß die Erfassungseinrichtung (20) mehrere Meßschaltungen (22,24) hat, von denen jeweils eine mit einem Touchscreen-Controller und einem Touchscreen (10,12) verbunden ist, wobei jeder der Touchscreen-Controller aus dem ihm zugeführten Meßsignal (MS1,MS2) und in Abhängigkeit von den Parameterdatensätzen die den Koordinaten der Berührung im jeweiligen Teilbild (52) zugeordneten Daten für die Koordinaten der Berührung im Vollbild (50) bestimmt und dem Computer (28) bereitstellt.

## Claims

1. System for capturing and processing user-dependent entries, the system comprising:

   - a plurality of touchscreens (10, 12; 10.1, 12.1) each producing an electrical touchscreen signal (TS1, TS2; TSn) which is a measure of touch-dependent coordinate information and is triggered as a result of the surface of the respective touchscreen being touched by way of user-dependent input,
   - a plurality of display devices (16, 18; 16.4, 18.4) which each display a full image (50; 50.4) or an image section (52), corresponding to a portion (54, 56) of the full image (50; 50.4) or to part of a virtual image surface area which is to be displayed as a whole, and whose screens are each provided with one of the touchscreens (10, 12; 10.1, 12.1),
   - a capture device (20; 20.1; 20.2) which captures the touchscreen signals (TS1, TS2; TSn) and provides a measurement signal (MS1, MS2, MSn; MS) for each of the touchscreen signals, and
   - a processing device (26),

     * which stores parameter data records identifying the position of the associated image section (52) in the full image (50; 50.4) for the respective display device (16, 18; 16.4, 18.4), and
     * which establishes, from the measurement signal (MS1, MS2, MSn; MS) from the capture device (20; 20.1; 20.2) and on the basis of the parameter data records, that data for the coordinates of the touch in the full image (50; 50.4) which is associated with the coordinates of the touch in the image section (52).

2. System according to Claim 1, **characterized in that** each parameter data record includes data indicating a scaling factor, the size of the screen on which the respective touchscreen (10, 12; 10.1, 12.1) is arranged, and the position of the image section (52) displayed on the respective display device (16, 18; 16.4, 18.4) in association with the full image (50; 50.4).

3. System according to Claim 1 or Claim 2, **characterized in that** a displayed image section (52) always corresponds to a rectangular section from the full image (50) and **in that** the processing device (26) establishes the coordinates of the touch in the full image (50) on the basis of the following expression:

$$\begin{pmatrix} X \\ Y \end{pmatrix} = \begin{pmatrix} X1 \\ Y1 \end{pmatrix} \bullet k + \begin{pmatrix} X0 \\ Y0 \end{pmatrix},$$

where (X1, Y1) gives the coordinates of the touch in the image section (52), k is a scaling factor, (X0, Y0) gives the coordinates of a selected dot in the image section (52) in the full image (50) for a scaling factor of k = 1, and (X, Y) gives the associated coordinates of the touch in the full image (50).

4. System according to one of Claims 1 to 3, **characterized in that** the processing device (26) is a computer (28) connected to a video memory (44) for storing the full image (50) and comprises a memory device (30) which stores the parameter data records, the computer (28) establishing, from the measurement signals (MS1, MS2, MSn; MS) and on the basis of the parameter data records, that data for the coordinates of the touch in the full image (50) which is associated with the coordinates of the touch in the respective image section (52).

5. System according to one of Claims 1 to 3, **characterized in that** the processing device (26) has a computer (28) connected to a video memory (44) for storing the full image (50; 50.4), a memory device (30) which stores the parameter data records, and a touchscreen controller (32) which is connected between the capture device (20; 20.1; 20.2) and the computer (28) and establishes, from the measurement signals (MS1, MS2, MSn; MS) and on the basis of the parameter data records, that data for the coordinates of the touch in the full image (50) which is associated with the coordinates of the touch in the image section (52), and outputs it to the computer (28).

6. System according to one of Claims 1 to 3, **characterized in that** the processing device (26) has a computer (28) connected to a video memory (44) which stores the full image (50), a memory device (30) which stores the parameter data records, and a touchscreen controller (32) which is connected between the capture device (20; 20.1; 20.2) and the computer (28) and establishes, from the measurement signals (MS1, MS2, MSn; MS) and on the basis of the parameter data records, the data associated with the coordinates of the touch in the image section (52) and outputs it to the computer (28), which establishes, from this data and on the basis of the parameter data records, the coordinates of the touch in the full image (50).

7.  System according to one of Claims 1 to 6, **characterized in that** the capture device (20.1; 20.2) has a measurement circuit (22.1) and a switching device (46) which is connected between the measurement circuit (22.1) and the touchscreens (10, 12), all the touchscreen signals (TS1, TS2, TSn) being applied to the input of the switching device (46) and the said switching device (46) only ever passing through one of the touchscreen signals to the measurement circuit (22.1).

8.  System according to Claim 7, **characterized in that** the computer (28) or the touchscreen controller (32) controls the switching device (46).

9.  System according to one of Claims 1 to 6, **characterized in that** the capture device (20) has a plurality of measurement circuits (22, 24) which are each connected to one touchscreen (10, 12) and each use the touchscreen signal (TS1, TS2, TSn) to produce an associated measurement signal (MS1, MS2, MSn).

10.  System according to one of Claims 1 to 3, **characterized in that** the processing device (26) has a computer (28), a memory device (30) which stores the parameter data records, and a plurality of touchscreen controllers, and **in that** the capture device (20) has a plurality of measurement circuits (22, 24), each of which is connected to one touchscreen controller and to one touchscreen (10, 12), with each of the touchscreen controllers determining, from the measurement signal (MS1, MS2) which is supplied to it and on the basis of the parameter data records, that data for the coordinates of the touch in the full image (50) which is associated with the coordinates of the touch in the respective image section (52), and providing the said data for the computer (28).

**Revendications**

1.  Système pour la saisie et le traitement de données utilisateur, le système comprenant :

    -   plusieurs écrans tactiles (10, 12 ; 10.1, 12.1) qui produisent chacun un signal d'écran tactile électrique (TS1, TS2 ; TSn) qui est une mesure pour des informations de coordonnées, dépendantes du contact, que déclenche comme donnée utilisateur le contact de la surface de l'écran tactile respectif,
    -   plusieurs dispositifs d'affichage (16, 18 ; 16.4, 18.4) qui affichent chacun une image complète (50 ; 50.4) ou une image partielle (52) qui correspond à un extrait (54, 56) de l'image complète (50 ; 50.4) ou à une partie d'une surface d'image virtuelle à afficher globalement et dont les écrans sont munis chacun d'un écran tactile (10, 12 ; 10.1, 12.1),
    -   un dispositif de saisie (20 ; 20.1 ; 20.2) qui saisit les signaux d'écrans tactiles (TS1, TS2 ; TSn) et qui prépare pour chacun des signaux d'écrans tactiles un signal de mesure (MS1, MS2, MSn ; MS), et
    -   un dispositif de traitement (26),

        *   dans lequel sont mémorisés des jeux de données de paramètres qui caractérisent pour le dispositif d'affichage respectif (16, 18 ; 16.4, 18.4) la position de l'image partielle associée (52) dans l'image complète (50 ; 50.4), et
        *   qui détermine à partir du signal de mesure (MS1, MS2, MSn ; MS) du dispositif de saisie (20 ; 20.1 ; 20.2) et en fonction des jeux de données de paramètres les données, associées aux coordonnées du contact dans l'image partielle (52), pour les coordonnées du contact dans l'image complète (50 ; 50.4).

2.  Système selon la revendication 1, **caractérisé par le fait que** chaque jeu de données de paramètres comprend des données qui indiquent un facteur d'échelle, la dimension de l'écran sur lequel est agencé l'écran tactile respectif (10, 12 ; 10.1, 12.1) et la position de l'image partielle (52), affichée sur le dispositif d'affichage respectif (16, 18 ; 16.4, 18.4), en association avec l'image complète (50 ; 50.4).

3.  Système selon la revendication 1 ou la revendication 2, **caractérisé par le fait qu'**une image partielle affichée (52) correspond toujours à un extrait rectangulaire de l'image complète (50) et que le dispositif de traitement (26) détermine les coordonnées du contact dans l'image complète (50) sur la base de l'expression suivante :

$$\begin{pmatrix} X \\ Y \end{pmatrix} = \begin{pmatrix} X1 \\ Y1 \end{pmatrix} \bullet k + \begin{pmatrix} X0 \\ Y0 \end{pmatrix}$$

(X1, Y1) indiquant les coordonnées du contact dans l'image partielle (52), k étant un facteur d'échelle, (X0, Y0) indiquant les coordonnées d'un point sélectionné de l'image partielle (52) dans l'image complète (50) pour un facteur d'échelle k = 1 et (X, Y) indiquant les coordonnées associées du contact dans l'image complète (50).

4.  Système selon l'une des revendications 1 à 3, **caractérisé par le fait que** le dispositif de traitement (26) comprend un ordinateur (28) qui est relié à une mémoire vidéo (44) pour la mémorisation de l'image complète (50) et un dispositif de mémorisation (30) dans lequel les jeux de données de paramètres sont mémorisés, l'ordinateur (28) déterminant à partir des signaux de mesure (MS1, MS2, MSn ; MS) et en fonction des jeux de données de paramètres les données, associées aux coordonnées du contact dans l'image partielle respective (52), pour les coordonnées du contact dans l'image complète (50).

5. Système selon l'une des revendications 1 à 3, **caractérisé par le fait que** le dispositif de traitement (26) comporte un ordinateur (28) qui est relié à une mémoire vidéo (44) pour la mémorisation de l'image complète (50 ; 50.4), un dispositif de mémorisation (30) dans lequel les jeux de données de paramètres sont mémorisés et un contrôleur d'écran tactile (32) qui est branché entre le dispositif de saisie (20 ; 20.1 ; 20.2) et l'ordinateur (28) et qui détermine à partir des signaux de mesure (MS1, MS2, MSn ; MS) et en fonction des jeux de données de paramètres les données, associées aux coordonnées du contact dans l'image partielle respective (52), pour les coordonnées du contact dans l'image complète (50) et les met à disposition de l'ordinateur (28).

6. Système selon l'une des revendications 1 à 3, **caractérisé par le fait que** le dispositif de traitement (26) comporte un ordinateur (28) qui est relié à une mémoire vidéo (44) dans laquelle l'image complète (50) est mémorisée, un dispositif de mémorisation (30) dans lequel les jeux de données de paramètres sont mémorisés et un contrôleur d'écran tactile (32) qui est branché entre le dispositif de saisie (20 ; 20.1 ; 20.2) et l'ordinateur (28) et qui détermine à partir des signaux de mesure (MS1, MS2, MSn ; MS) et en fonction des jeux de données de paramètres les données associées aux coordonnées du contact dans l'image partielle respective (52) et les met à disposition de l'ordinateur (28) qui détermine à partir de ces données et en fonction des jeux de données de paramètres les coordonnées du contact dans l'image complète (50).

7. Système selon l'une des revendications 1 à 6, **caractérisé par le fait que** le dispositif de saisie (20.1 ; 20.2) comporte un circuit de mesure (22.1) et un dispositif de commutation (46) qui est branché entre le circuit de mesure (22.1) et l'écran tactile (10, 12), tous les signaux d'écrans tactiles (TS1, TS2, TSn) étant présents en entrée du dispositif de commutation (46), et qui ne transmet toujours qu'un seul des signaux d'écrans tactiles au circuit de mesure (22.1).

8. Système selon la revendication 7, **caractérisé par le fait que** l'ordinateur (28) ou le contrôleur d'écran tactile (32) commande le dispositif de commutation (46).

9. Système selon l'une des revendications 1 à 6, **caractérisé par le fait que** le dispositif de saisie (20) comporte plusieurs circuits de mesure (22, 24) qui sont reliés chacun à un écran tactile (10, 12) et qui produisent chacun à partir du signal d'écran tactile (TS1, TS2, TSn) un signal de mesure associé (MS1, MS2, MSn).

10. Système selon l'une des revendications 1 à 3, **caractérisé par le fait que** le dispositif de traitement (26) comporte un ordinateur (28), un dispositif de mémorisation (30) dans lequel les jeux de données de paramètres sont mémorisés et plusieurs contrôleurs d'écrans tactiles et que le dispositif de saisie (20) comporte plusieurs circuits de mesure (22, 24) qui sont reliés chacun à un contrôleur d'écran tactile et à un écran tactile (10, 12), chacun des contrôleurs d'écrans tactiles déterminant à partir du signal de mesure (MS1, MS2) qui lui est envoyé et en fonction des jeux de données de paramètres les données, associées aux coordonnées du contact dans l'image partielle respective (52), pour les coordonnées du contact dans l'image complète (50) et les mettant à disposition de l'ordinateur (28).

Fig.1

EP 1 019 800 B1

14

VGA Aapter

AS1

16

ODB

CB

UDB

D
C
D

Anzeigeeinrichtung

VGA
Controller

Video-
Speicher

Tor-
Schaltg

CB'

AS2

D
C

Anzeigeeinrichtung

48  40    44        42

12

**Fig. 2**

MS

22.1

TS

Mess-
Schaltung

TS1

Schalteinrichtung

TS2

SS

46

Erfassungs-Einrichtung

20.1

**Fig. 3**

13

Fig. 4

16.4 Anzeigeeinrichtung

TS1

Touchscreen

44

50.4

Videospeicher

10.4

54          56

18.4 Anzeigeeinrichtung

Touchscreen

TS2

12.4          Fig. 5

EP 1 019 800 B1